# EUROPEAN PATENT APPLICATION

(11) **EP 3 112 125 A1**
(43) Date of publication of application: **04.01.2017**
(21) Application number: 15175119.5
(22) Date of filing: 02.07.2015
(51) Int. Cl.: B29C 47/02, B29C 47/12, B29C 47/32, B29C 47/08, B29C 47/00, B29L 7/00

(54) **EXTRUSION SYSTEM AND METHOD FOR CREATING MORE VERSATILE EXTRUDATES**

(71) Applicant: FRANK KUNSTSTOFFTECHNIK GmbH, 61200 Wölfersheim (DE)
(72) Inventor: Kern, Jürgen, 35398 Gießen (DE); Neufeld, Wjatscheslaw, 35410 Bellersheim (DE)
(74) Representative: Eisenführ Speiser

(57) **Abstract**

The invention relates to an extrusion system (1) that comprises an extruder unit (10) with a nozzle device (11) for extruding an extrudate (2) in an extrusion direction (15), and a die unit (20) having a die carrier device (21) carrying at least one die component (200) with a profile (50) for receiving the extrudate (2) from the nozzle device (11), wherein the profile (50) of the die component (200) is configured to be positioned temporarily and at least partly in front of the nozzle device (11) of the extruder unit (10), wherein the die carrier device (21) is configured to rotate about a rotation axis (26) intersecting the extrusion direction (15). The invention further relates to a control method for controlling an extrusion system (1), particularly an extrusion system according to the invention, and comprises the steps of: extruding material through a nozzle device (11) in an extrusion direction (15) of an extruder unit (10); receiving the extruded material in a profile (50) of at least one die component (200) of a die carrier device (21) of a die unit (20) positioned temporarily and at least partly in front of the nozzle device (11) of the extruder unit (10); and rotating the die carrier device (21) about a rotation axis (26) intersecting the extrusion direction (15).

## Description

The present invention relates to an extrusion system according to the preamble of independent claim 1 and a control method for controlling an extrusion system according to the preamble of independent claim 15.

In particular, the present invention relates to an extrusion system comprising an extruder unit with a nozzle device for extruding an extrudate in an extrusion direction, and a die unit having a die carrier device carrying at least one die component with a profile for receiving the extrudate from the nozzle device, wherein the profile of the die component is configured to be positioned temporarily and at least partly in front of the nozzle device of the extruder unit. The present invention further relates to a control method for controlling an extrusion system comprising the steps of extruding material through a nozzle device in an extrusion direction of an extruder unit; and receiving the extruded material in a profile of a die component device of at least one die component of a die unit positioned temporarily and at least partly in front of the nozzle device of the extruder unit.

Conventional extrusion systems and control methods therefor are employed to create extrudates of a fixed cross-sectional profile in axial direction of the extrudate due to a constant opening of a die the material to be extruded is pressed through. An exemplary advantage over different manufacturing processes, such as injection molding, in which the product size is limited by the size of the mold, is that manufactured extrudate can be theoretically indefinitely long.

Nevertheless, in some applications, a non-continuous cross-section would be beneficial, even though the size requirements impede the use of other manufacturing techniques such as injection molding.

Exemplarily, a non-continuous cross-section includes a complex shape of an extrudate. A desired complex shape of an extrudate can include irregularities, indentations, undercuts or sections of different rigidity and the like in a longitudinal direction of the extrudate. The complex shape itself can usually be regular, i.e. following a periodical or cyclic pattern. Until now, such complex shape in axial direction of the extrudate required unfavorable further, separate processing steps such as cutting or other transforming steps after extrusion.

In addition or in the alternative to a complex shape, some applications create the need of non-continuous cross-section due to other material included within the extrudate. For instance, German utility model DE 20 2004 019 005 discloses a heating wire embedded into an extruded thermoplastic material for the welding of plastics, in particular plastic tubes. In the manufacturing process, a sheet of translucent thermoplastic material is extruded in the first place. The extruded sheet is then subjected to a press, which presses a heating wire with arbitrary layout into the not fully cooled extrudate. Accordingly, the manufacturing process according to the state of the art requires an additional, second manufacturing step following the extrusion. Moreover, due to the two manufacturing steps, the resulting extrudate is exposed double-stress which reduces the thermal and mechanical resilience of the extrudate.

In the same way as exemplified, providing indentations, elevations or other material inserts with the extrudate have required a second manufacturing step following extrusion. As multiple manufacturing steps are costly and complex, the desire exists to simplify the manufacturing of extrudates with partially varying axial cross-section.

It is therefore an object of the present invention to provide an extrusion system and a control method therefor that provide an extrudate with partially varying axial cross-section, without the need for additional manufacturing steps.

According to a first embodiment of the present invention, there is provided an extrusion system comprising an extruder unit with a nozzle device for extruding an extrudate in an extrusion direction, and a die unit having a die carrier device carrying or being provided with at least one die component with a profile for receiving the extrudate from the nozzle device, wherein the profile of the die component is configured to be positioned temporarily and at least partly in front of the nozzle device of the extruder unit, wherein the die carrier device is configured to rotate about a rotation axis intersecting the extrusion direction

In a conventional extrusion system, the die is provided fixed with respect to the extruder unit. In contrast thereto, by providing a die unit having a die carrier device carrying at least one die component with a profile for receiving the extrudate from the nozzle device, wherein the profile of the die component is configured for being positioned in front of the nozzle of the extruder unit and is movable relative to the nozzle by rotating the die carrier device about a rotation axis, it is not only possible to produce a continuous product strand with a regular cross-section, but it is also possible to provide a varying shape or cross-section of the profile of the die component and therefore different shapes of the final extrudate at regular or irregular positions of the die carrier device. In an advantageous manner, the extrusion system according to the first embodiment of the present invention therefore allows varying extrudate cross-sections by moving or rotating the die carrier device about a rotation axis.

In a preferred development of the invention, the final extrudate is obtained by filling up the profile of the at least one die component in front of the nozzle device and moving the respectively filled profile relative to the nozzle device. Accordingly, in this preferred development, the final extrudate is eventually created in moving direction of the profile, respectively in the rotation direction of the die carrier device about the rotation axis, wherein it has been created in the extrusion direction of the extruder unit until now.

In other words, as the die carrier device is configured to rotate about a rotation axis intersecting the extrusion direction, altering or varying profiles having the same or different cross-sections can be positioned in front of the nozzle device for receiving extrudate, wherein the final extrudate is created by extruding extrudate from the nozzle device into the profile of the at least one die component and by rotating the die carrier device together with the profile about the rotation axis that is not parallel to the extrusion direction of the extruder unit.

According to a preferred development of the present invention, the die unit comprises a table for supporting the die carrier device thereon, a driving device for rotating the die carrier device about the rotation axis, and die support portions for substantially horizontally supporting the die carrier device on the table.

Extruding material onto the profile of the die component can imply substantial necessary pressure, in order for the extrudate to adapt to the profile of the at least one die component. An advantage of this development consists in the substantial pressure being received by the die support portions, such that the die carrier device can rotate about the rotation axis without negative impact from the extrusion pressure.

According to a further preferred development of the present invention, the die carrier device is configured to rotate about a substantially vertical axis as the rotation axis.

In this disclosure, axes, angles or directions can be given as horizontal, vertical, parallel, perpendicular and the like. However, as apparent to a person skilled in the art, axes, angles and directions are only ideally horizontal, vertical, parallel or perpendicular, respectively, and deviations therefrom are always contemplated. Preferably, a deviation within 45°, preferably within 35° or 25° or 15°, more preferably within 10° and most preferably within 5°, of every angle in both deviation directions is in the following understood as substantially horizontal, vertical, parallel and perpendicular. For instance, two axes are considered substantially parallel if the angle between them is less than or equal to 15°, more preferably less than or equal to 10° and most preferably less than or equal to 5°.

Rotating the die carrier device about a substantially vertical axis allows the size of the die carrier device not to be limited by interior dimensions, such as a height of a room the extrusion system can be mounted in. Moreover, access to every part of the die carrier device is facilitated for an operator and a risk of accident such as by falling from a high position can be reduced. For instance for maintenance purposes or for purposes of modifying the die carrier device, such as by replacing at least one die component or at least one profile element, the arrangement is thus advantageous. Furthermore, as the extrusion direction is preferably a horizontal direction, the rotation direction and thus an azimuthal moving direction of the profile of the die component in front of the extruder unit can easily be arranged to be substantially perpendicular to the extrusion direction of the extruder unit.

According to a preferred development of the present invention, the die carrier device is provided in the form of a substantially circular wheel, wherein the at least one die component is provided on the outer circumferential surface of the die carrier device.

By providing the die carrier device in the form of a substantially circular wheel, rotation about a rotation axis that corresponds to the center axis of the wheel is possible without difficulties. By further providing the at least one die component on the outer circumferential surface of the die carrier device, it is possible in an easy and straightforward way to provide the profile of the at least one die component in front of the nozzle device of the extruder unit. Moreover, by rotating the die carrier device about the rotation axis, it is thus possible to position the entire outer circumferential surface of the die carrier device in front of the extruder unit by rotating the substantially circular wheel a full turn about the rotation axis. Furthermore, the at least one die component is thus in a beneficial way directly and easily accessible, for instance for an operator.

According to a preferred development of the present invention, the die carrier device is arranged to be provided with multiple die components being distributed over the outer circumferential surface of the die carrier device.

By providing multiple die components, the outer circumferential surface area of the die carrier device can advantageously be covered by profile of die components at a high percentage of the total surface. In some developments the outer circumferential area is thus completely covered by die components being distributed thereon. However, it can also be preferred in some cases to only have a certain portion of the outer circumferential area covered by die components, for instance about half of the surface area or any other portion can be beneficial to be covered by die components in some developments. Further, in other applications also a single die component can be preferred.

According to a preferred development of the present invention, the die carrier device is adapted to be replaceably attached to the die unit. Additionally or alternatively at least one of the at least one die components is adapted to be replaceably attached to the die carrier device.

By providing the die carrier device to be replaceably attached to the die unit, it is possible to replace the entire die carrier, such as the substantially circular wheel, in order to adapt to the particular specifications of the final extrudate to be created. For instance, in case the extrudate is intended to become thicker, a circular wheel with a larger diameter could be beneficial, such that a time the extrudate can remain on the outer circumferential surface of the die carrier device becomes longer, as the circumference of the larger die carrier device also becomes larger. In different situations, it might be advantageous to disassemble the entire system, for instance, for installing the extrusion system at a different location.

By providing at least one of the at least one die components replaceably attached to the die carrier device, it is possible to replace individual die components, for instance to specifically provide distinct profiles. It is thus possible to replace single die components, without having to change the entire die carrier device. In one embodiment, all die components are replaceably attached to the die carrier device. However, in a different embodiment, only some of the die components are replaceably attached. Moreover, in a further embodiment, none of the die components is replaceably attached to the die carrier device. In that embodiment, in order to change a die component, the entire die carrier device would have to be replaced.

According to a preferred development of the present invention, the die carrier device comprises attachment means, such as snap-on connection means or screw-on connection means, for removably attaching the die carrier device to the die unit. Additionally or alternatively at least one of the at least one die components comprises attachment means, such as snap-on connection means or screw-on connection means, for removably attaching the die component to the die carrier device.

By providing screw-on connection means or snap-on connection means for removably attaching the die carrier device or the die component, it is possible to ensure a fast and secure connection between the respective elements. Most importantly, connections realized by those means are releasable in an easy and straightforward manner. However, the skilled person is also aware of different ways and forms of connecting, particularly releasably connecting, the respective elements of the extrusion system, for instance the die carrier device to the die unit, or a die component to the die carrier device.

According to a further preferred development of the present invention, the die carrier device comprises the at least one die component as an integral part thereof. Additionally or alternatively, the at least one die component comprises the profile as an integral part thereof.

In this development, it may be preferable to provide the die carrier device with the die component as an integral part thereof. For instance in the case, in which a die carrier device is used to always create the same profile, it may be more cost-efficient to manufacture a die carrier device having the die component as an integral part thereof, as a releasing and replacing of the die component would be of no benefit. Furthermore, or in the alternative thereof, also the profile can be provided as an integral part of the die component. Accordingly, in one development, the die carrier device is formed of a single piece having the die component as well as the profile as an integral part thereof.

According to a preferred development of the present invention, the at least one die component is arranged to move in a direction substantially perpendicular to the extrusion direction of the extruder unit when being positioned at least partly in front of the nozzle of the extruder unit upon rotation of the die carrier device.

By moving the at least one die component in a substantially perpendicular direction to the extrusion direction of the extruder unit, it is possible to obtain an optimal angle of attack between the profile and the extrusion direction of the extruder unit. In particular, by avoiding force components perpendicular to the extrusion direction of the extruder unit, it is possible to utilize the impact pressure and force for shaping the extrudate into the profile shape in an efficient way.

In an independent development of the present invention, the at least one die component comprises a receptacle, wherein the receptacle is arranged for replaceably receiving at least one profile element with a profile for receiving the extrudate from the nozzle and for removably attaching the profile element within the receptacle.

By providing a receptacle in the at least one die component, it is advantageously possible to reliably attach a profile element with a profile to the die component. Accordingly, in case the profile is no integral part of the die component, such receptacle allows for reliably receiving the profile element within the at least one die component.

In one development of the present invention, one of the at least one die component comprises such receptacle. However, in a different development of the present invention, more than one of the at least one die component or all of the die components comprise such receptacle. In a further development, it is also contemplated that none of the die components comprises a receptacle.

According to a preferred development of the present invention, the receptacle comprises attachment means, such as snap-on connection means or screw-on connection means, for removably attaching the profile element to the receptacle.

By providing the attachment means for removably attaching the profile element to the receptacle, it is possible to securely attach the profile element to the receptacle. It is thus unlikely that the removably attached profile element be loosened without so intended. By preferably employing snap-on connection means or screw-on connection means, a removable connection between profile element and receptacle is provided in an easy and reliable manner.

According to a preferred development of the present invention, the receptacle has an opening provided on a front wall thereof, through which the profile element is insertable.

By providing an opening on a front wall of the receptacle that is configured to be positioned temporarily and at least partly in front of the nozzle device, the profile element provided within the receptacle can thus also be positioned in front of the nozzle of the extruder unit without difficulties. Thereby, the design of the profile element can be further simplified.

According to a further preferred development of the present invention, the receptacle further comprises a protruding nose on the bottom surface of the receptacle for engaging a corresponding recessed portion of a bottom surface of the profile element, and an attachment hole on the upper surface of the receptacle, wherein the attachment means are arranged to removably attach the profile element such that the profile element is secured using at least the nose and the attachment hole.

By providing a protruding nose on the bottom surface and an attachment hole on the upper surface of the receptacle, it is possible to secure the profile element on both sides of the opening within the receptacle.

The profile element may in one embodiment also be secured to the sidewalls of the receptacle. However, in a different development, it is possible that the receptacle is continuous, such that the profile element is only in contact with the receptacle, respectively the die component, on the upper, lower and rear surface thereof.

According to a preferred development of the present invention, the at least one die component is divided, preferably horizontally divided, into two die component halves, wherein the die carrier device is arranged to move the two die component halves relative to each other upon rotating about the rotation axis.

In this development, two die component halves are provided. However, in a different development, more than two die component parts are also contemplated. For instance, die component can also consist of three or even more die component parts.

In one development, the die component halves are of the same size. Nevertheless, in a different development, it is also possible that the die component halves are of different size, such that one of the die component halves is bigger than the other half.

Furthermore, although the die component is preferably horizontally divided in this development, in a different embodiment it can be contemplated to divide the die component verticality, or with an arbitrary shape of division.

According to a preferred development of the present invention, the two die component halves have a closed position in which the two die component halves are arranged in contact with each other so as to form a single profile, and an open position in which the two die components are arranged separate from each other, wherein the die carrier device is arranged to move the two die component halves from the open position to the closed position and vice versa upon rotating about the rotation axis.

By providing the die component halves with an open and closed position, it is possible to provide undercuts within the final extrudate. More specifically, by extruding extrudate into the profile while the die component halves are in the open position and closing the die component halves afterwards, it can be possible to provide extrudate to an undercut position of the profile that is defined by the two die component halves and which is not accessible to extrusion in the closed position of the die component halves.

In one development of the present invention, the two die component halves are biased towards the open position. In other words, force has to be applied in order to move the die component halves from the open to the closed position and to maintain the die component halves in the closed position. In another development of the present invention, the two die component halves are biased in the closed position, such that force has to be applied in order to open the die component halves and maintain them in an open position. In a further preferred development the two die component halves are not biased against each other. In this development, the die component halves remain at that position, unless force in the one or another direction is applied to at least one of the die component halves.

According to a preferred development of the present invention, the die carrier device comprises a guiding component, such as a nose protruding from a ring component provided radially at least partly in front of the die carrier device, and wherein at least one of the two die component halves comprises a corresponding guiding element, such as a groove, wherein the guiding component and the guiding element are arranged to interact such that the two die component halves are transformed from the open position to the closed position and vice versa upon rotating about the rotation axis. It is further preferred that the guiding component and the corresponding guiding element form a compulsory guide.

In this development, the two die component halves are preferably in the open position when positioned at least partly in front of the nozzle device. Following the nozzle device in rotation direction of the die carrier device, the guiding elements together with the guiding component account for the die component halves to be moved to the closed position. Thereby, undercuts in the final extrudate are possible, which would not have been possible with a profile consisting of a single part. In the closed position, the two die component halves are further rotated about the rotation axis until the guiding element and the corresponding guiding component at some point interact to transform the two die component halves from the closed position to the open position. In the open position, the extrudate is ready for separation from the die carrier device.

In this development, the guiding component translates verticality, such that the corresponding guiding element follows the guiding components.

Although a ring component is provided for guiding at least one of the tool die component halves in this development, the skilled person directly understands that any component is suitable that allows for a periodical separation and/or a circulation of the two die component halves upon the rotation about the rotation axis.

According to a preferred development of the present invention, the profile varies in rotation direction of the die carrier device.

A varying profile in rotation direction of the die carrier device allows for a non-constant cross-section of the final extrudate. The profile can be varying among a single die component, or a profile can vary between different die components. Also combinations of constant and a non-constant profiles within the die carrier device are contemplated.

According to a further preferred development of the present invention, the profile comprises one or several of indentations, elevations and/or inserts.

Indentations, elevations and/or inserts provided within the profile account for elevations, indentations, respectively embedded material in the final extrudate. In other words, the profile can be identified as a negative of the final extrudate, with every shape being provided in the profile eventually being present in the final extrudate, with inverted dimensions. The provision of indentations, elevations and/or inserts within the profile therefore accounts for the desired, specific and/or individual shape of the final extrudate.

An independent development of the present invention, the extrusion system further comprises an insertion unit for inserting material, such as conducting wire, in the profile of the at least one die component, wherein the die carrier device is configured to rotate about the rotation axis in a preferred rotation direction and wherein the profile is configured to be positioned in front of the insertion unit prior to the nozzle device in the preferred rotation direction of the die carrier device.

Wherein with former extrusion systems, in order to embed material inside the final extrudate it was necessary to execute a second manufacturing step after extruding. For instance, in order to embed a conducting wire within the extruded material, it was necessary to press the wire within the extrudate in a second, consecutive manufacturing step. By providing an insertion unit for inserting material prior to the die carrier device being positioned in front of the nozzle device of the extruder unit, material inserted into the profile of the die component remains within the profile upon the extrudate being extruded into the profile. Thereby, every material already present within the profile prior to the extruding of the extruded material becomes embedded within the final extrudate. It is thus advantageously possible, to allow for arbitrary material to be embedded within the extrudate, without the need of a second consecutive manufacturing step.

According to a preferred development of the present invention, the insertion unit is a feeding means for feeding parts to be embedded in extrudate being ejected by the nozzle device into the at least one die component.

The insertion unit being a feeding means allows that the provision of material to be embedded in the extrudate is constantly, i.e. without interrupting, possible.

According to a preferred development of the present invention, the feeding means is arranged to feed wire of arbitrary pattern and shape, such as meander-like shaped conducting wire, to the at least one die component.

Depending on the desired application, it might be advantageous to embed conducting wire within the extruded material. For instance, in the application of plastic welding heating wires are provided within the extrudate to sufficiently heat the welding wire such that a reliable connection between the parts to be welded gets formed. In this development of the invention it is thus possible to manufacture wires or cables for plastic welding in one manufacturing step that are ready to use.

The feeding means in this development preferably is enabled to feed conducting wire of arbitrary pattern and shape, for instance straight conducting wire or meander like shaped conducting wire. A meander shaped conducting wire provides the advantage of a length of the conducting wire which is a multiple of the length of the final extrudate. It is thus possible to produce multiple times the amount of heat as possible by, for instance, a single conducting wire.

In an independent development of the present invention, the extrusion system further comprises a control unit with a die control device for controlling the operation of the die unit and an extruder control device for controlling the operation of the extrusion unit, wherein the control unit is arranged to operate the die control device and the extruder control device such that the rotation of the die carrier device is synchronized with the extrusion rate of the extrusion unit.

By synchronizing the extrusion rate with the rotation of the die carrier device, it can be assured that the correct amount of extrudate is provided to the profile of the die carrier device. Furthermore, it can thus be avoided to provide a too highpressure thus risking damage to the extrusion the system and/or too little pressure, such that it is not possible to create the final extrudate in the desired form.

According to a preferred development of the present invention, the control unit further comprises an insertion control device for controlling the insertion unit, wherein the control unit is arranged to operate the die control device, the extruder control device and the insertion control device such that a rotation of the die carrier device is synchronized with an extrusion rate of the extrusion unit and an insertion speed of the insertion unit.

By further synchronizing the insertion speed of the insertion unit with the extrusion rate and the rotation of the die carrier device, material to be inserted can be provided with a correct speed, such that the inserted material appears at the desired position within the final extrudate.

According to a preferred development of the present invention, the extrusion direction of the extruder unit is arranged perpendicular to the rotational axis of the die carrier device, and wherein the extrusion direction of the extruder unit is substantially perpendicular to the azimuth direction of the rotation of the die carrier device.

By providing a substantially perpendicular rotational axis to the extrusion direction, it is possible to apply the extrudate from a substantially normal direction with regard to the outer circumferential surface of the die carrier device. A pressure applied on the die carrier device by the extruder unit is thus preferably specifically adjusted.

According to a preferred development of the present invention, the extrusion direction of the extruder unit is arranged substantially horizontally.

By extruding substantially horizontally, the extrusion direction can be parallel to the radial direction of the die carrier device. Thus, by further orienting the extruder towards the center of die carrier device, the extrusion direction intersects the outer circumferential surface at the position in which the nozzle device is provided in front of die carrier device substantially normal, i.e. parallel to the radial direction of the outer circumferential surface of the die carrier device.

According to a preferred development of the present invention, the nozzle device comprises a counter element that is arranged to be at least partly in contact with the at least one die component, wherein the surface of the final extrudate is defined by the profile of the at least one die component and the counter element.

According to a further preferred development of the present invention, the counter element is arranged to strip excessive extrudate off the profile of the at least one die component, upon rotation of the die carrier device about the rotation axis.

The counter element is arranged to be partly in contact with the at least one die component, such that the counter element strips excessive extrudate off the profile. Thereby, one edge of the final extrudate is defined by the counter element contacting the extrudate in the profile while the die carrier device is rotated about the rotation axis.

According to a preferred development of the present invention, the counter element is replaceable.

By providing the counter element replaceable, it is possible to adapt the counter element to the particular profile to be used.

According to a preferred development of the present invention, the profile of the at least one die component comprises: a substantially flat shape, wherein the counter element comprises a corresponding flat shape; a convex shape, wherein the counter element comprises a concave shape substantially matching the concave shape of the profile of the at least one die component, or vice versa; and/or a folded shape, wherein the counter element comprises a correspondingly folded shape that matches the folded shape of the profile of the at least one die component.

By providing the counter element in contact with the profile and corresponding to the shape of the respective profile of the at least one die component, an extrudate with definable surface on all outer surfaces is obtainable.

According to a preferred development of the present invention, the extrusion system further comprises a separation unit for separating the extrudate from the at least one die component.

In this development, a separation unit is provided for separating the extrudate from the die carrier device, in particular from the profile of the at least one die component. After passing in front of the extruder unit in rotation direction, extrudate received within the at least one die component relaxes and cools down such that no further deformations occur. The extrudate is retained within die carrier device, respectively the die component, until it can be separated from the carrier without danger of influencing quality or shape of the extrudate. Accordingly, in this development the extrusion rate and the rotation speed of the die carrier device will be influenced by the time needed by the extrudate to sufficiently relax, respectively cool down. Viewed from the other side, the dimension of the die carrier device must be laid out such that the relaxation or cooling off time for the extrudate received within the at least one die component be sufficiently large in order to cope with rotation speed and extrusion rate of the extrusion system. According to a preferred development of the present invention, the extrusion system further comprises at least one further extruder unit with a further nozzle device for extruding a further extrudate, wherein the profile of the at least one die component is arranged to be positioned at least partly in front of the further nozzle device temporarily after the first nozzle device, when the die carrier device is rotated about the rotation axis.

The at least one further extruder unit can be provided in the same plane as the first extruder unit. Accordingly, it can also be provided such that the extrusion direction points towards the die carrier device. Preferably, the further extruder unit extrudes material almost parallel to the radial direction of the die carrier device and thus substantially normal to the outer circumferential surface of the die carrier device. In other words, the rotation axis of die carrier device preferably also intersects the further extrusion direction.

In a different development, the at least one further extruder unit can extrude the same or a different extrusion material. For instance, material having particular features or properties can be extruded by the at least one further extruder unit. Examples for these materials include insulating material, conducting material, and the like.

According to a further embodiment of the present invention, there is provided an extrusion installation comprising a first and a second extrusion system according to any of the preceding claims, wherein the die units of the first and second extrusion system, respectively, are arranged to at least partly contact each other, such that the extrudate received in the first at least one die component and in the second at least one die component, respectively, is contacted to form a single joint extrudate.

The extrusion installation provides for a combination of multiple layers of extrudate formed in respective die carrier devices. Thereby, a single joint extrudate is formed, which shows the profile of the respective die components on all surface sides of the extrudate. In other words, no surface side of the single joint extrudate manufactured in the extrusion installation is defined by a counter element of the respective first and second extrusion system, as the sides defined by the counter elements in the single extrudates are joined together to form a single joint extrudate. Thus, it is advantageously possible to produce a more versatile, flexible extrudate in accordance with individual requirements. The skilled person in the art also directly understands that the first and second extruded material can be the same or can be different materials to be extruded.

According to a further embodiment of the present invention, there is provided a control method for controlling an extrusion system, particularly an extrusion system according to the present invention, comprising the steps of extruding material through a nozzle device in an extrusion direction of an extruder unit; receiving the extruded material in a profile of at least one die component of a die carrier device of a die unit positioned temporarily and at least partly in front of the nozzle device of the extruder unit; and rotating the die carrier device about a rotation axis intersecting the extrusion direction.

The control method controls the extruding of the extruder unit in an extrusion direction, wherein the extruded material is received in the die carrier device, respectively a profile of at least one die component thereof. By rotating the die carrier device about the rotation axis intersecting the extrusion direction, final extrudate is created in a direction different from the extrusion direction of the extruder unit. Thereby, extrudate comprising a cross-section different from the cross-section of the extruder unit can be created. Moreover, it is possible by varying the profile with respect to the rotation direction of the die carrier device to provide extrudate with a varying, i.e. non-constant, cross-section in longitudinal or axial direction.

According to a preferred development of the present invention, the method further comprises the step of synchronizing the extruding of the extruder unit with the rotating of the die carrier device.

By synchronizing the extruding with the rotating of the die carrier device, it can be ensured that the appropriate amount of extrudate is extruded by the extruder unit that is needed for filling up the profile being positioned in front of the nozzle device of the extruder unit. Thereby, inadequate stress that could result in damage to the extrusion system can be avoided, such as by rotating the die carrier device with too little speed. In the contrary, not enough pressure would be applied and the profile would not become filled by extruded material, in case the die carrier device would be rotated too fast.

According to a preferred development of the present invention, the method further comprises the steps of inserting material in the profile of the at least one die component by an insertion unit positioned prior to the nozzle device in the rotation direction of the die carrier device, and synchronizing the inserting of material of the insertion unit with the extruding of the extruder unit and the rotating of the die carrier device.

By further synchronizing the insertion of material with the extruding and the rotating, as indicated in another preferred development above, reliable provision of inserted material can be ensured. It can thereby be avoided that too much or too little material gets inserted or embedded in the final extrudate.

Further advantages and preferred embodiments of the present invention will be described in the following together with the drawings listed below.

In the drawings:
- Figs. 1a to 1c: show different views of an exemplary extrusion system according to the present invention;
- Figs. 2a and 2b: show the insertion unit of the extrusion system shown in Figs. 1 a to 1 c in more detail;
- Figs. 3a to 3e: show perspective views on different examples of profiles of extrudate to be manufactured with an extrusion system of the present invention;
- Fig. 4: shows a cross-section of a die component and the corresponding profile employed in the extrusion system according to the present invention;
- Fig. 5: shows a cross-section of a die component with a receptacle used to carry profile elements as an example of dies used with the extrusion system of the present invention;
- Figs. 6a to 6d: show cross-sections of the die component of Fig. 5 together with different profile elements attached thereto;
- Figs. 7a to 7d: show frontal views on the profile elements of Figs. 6a to 6d;
- Figs. 8a and 8b: show different extrudate shapes resulting from different corresponding nozzle shapes;
- Fig. 9a: shows an exemplary extrudate consisting of multiple layers of extruded material,
- Fig. 9b: shows a system for producing the extrudate shown in Fig. 9a,
- Fig. 9c: shows an exemplary extrudate having a formed upper edge and a shaped front side,
- Figs. 10a and 10b: show an example of die components consisting of two die component halves,
- Fig. 11: shows an exemplary schematically depicted functional overview of the control unit of the extrusion system, and
- Fig. 12: shows a flowchart of an exemplary control method.

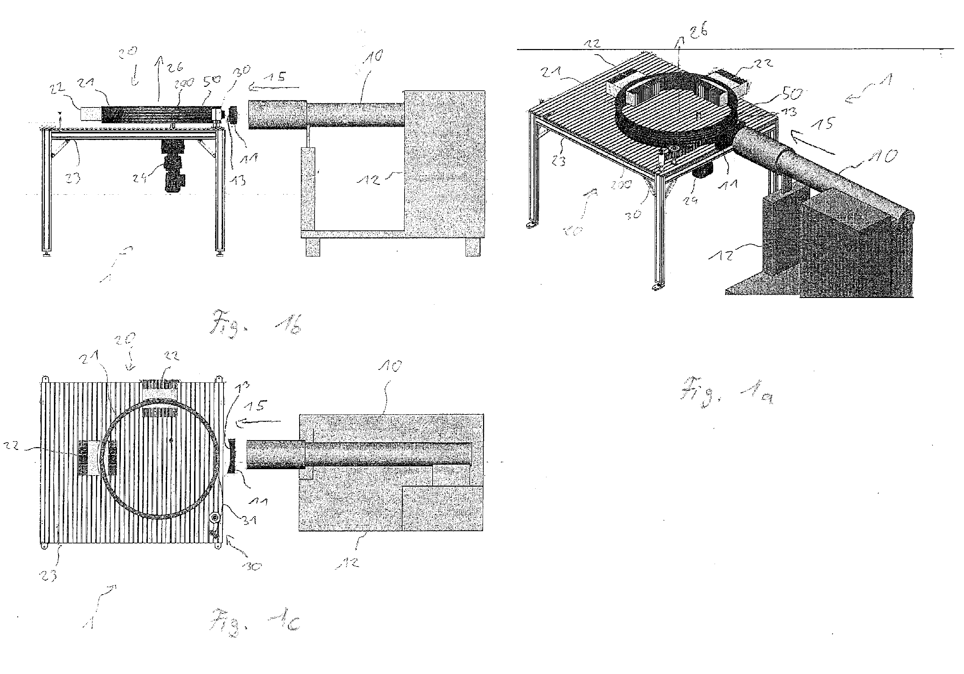

Figs. 1a to 1c show different views on an exemplary form of carrying out the extrusion system 1 according to the present invention. In particular, Fig. 1a shows a three-dimensional perspective view, Fig. 1b shows a side view and Fig. 1c a top view on an exemplary form of carrying out the extrusion system 1 according to the present invention.

The exemplary inventive extrusion system 1 comprises extruder unit 10, die unit 20 and the optional insertion unit 30.

Extruder unit 10 includes, in this example, an extruder supporting device 12, such as a supporting construction comprising, for instance, the supply of material to be extruded. Extruder unit 10 extrudes the material to be extruded through a nozzle device 11 in an extrusion direction 15 onto a part of the die unit 20 in front of nozzle device 11.

Die unit 20 comprises, in this example, a die carrier device 21 in the form of a substantially circular wheel being at least substantially horizontally supported on a supporting device 23 such as a supporting table. In this example, the die carrier device 21 is arranged to be driven by a motor 24 which thereby rotates the die carrier device 21 in a counter-clockwise direction about a rotation axis 26 being oriented substantially vertically. The die carrier device 21 is supported by bearings (not shown) which can e.g. be formed by rollers or the like or by friction bearings. Moreover, at the location of nozzle device 11, guiding means can be arranged at the inner side of die carrier device 21 for providing a positive guide of the die carrier device 21 opposite to nozzle device 11 in order to have a constant geometry at the forming location of the extrudate (not shown in Fig. 1) independent from a thermal expansion of carrier device 21 so that the resulting extrudate can be formed well defined.

First, the general process of how extrudate is eventually created by extrusion system 1 is explained in further detail. The extrudate material is extruded by extruder unit 10 via nozzle device 11 in the extrusion direction 15 onto a part of a profile 50 of a die component 200 of die carrier device 21 in front of nozzle device 11. The extruded material therefore fills the profile in front of extruder unit 10. By rotating the die carrier device 21 about rotation axis 26, the profile 50 portion filled with extruded material is thereby rotated away from nozzle device 11. In other words, parts of the profile filled with extruded material are rotated away from the extrusion unit 10 to thereby position parts of the profile 50 of die component 200 in front of extruder unit 10 that are not filled with extruded material yet. Thereby, the final extrudate is created in a rotation or azimuthal direction with regard to the die carrier device 21, as the material follows the movement of said die carrier device 21. The extrudate can thus be regarded as being created in a direction different from extrusion direction 15.

In the example of Figs. 1 a to 1c, the die carrier device 21 comprises a single die component 200 on the outer circumferential surface thereof. Profile 50 is provided on the radially outwardly oriented surface of die component 200. In other examples, more than one die component 200 with corresponding profiles 50 can be provided with the die carrier device 21. Thus, it is possible to establish a modular system such that die carrier device 21 is the base element on which similar or different die components can be arranged in regular or irregular distances in circumferential direction of die carrier device 21.

Preferably, at a later position of the rotation about rotation axis 26, the extrudate is separated from die component 200 (not shown in Fig. 1). After separating the extrudate from the die component 200 respectively the die carrier device 21, the corresponding profile 50 of the die component 200 is ready to be reused, i.e. refilled with extruded material. Thereby, a continuous rotation of die carrier device 21 and thus a continuous provision of extrudate and an uninterrupted operation of extrusion system 1 is possible.

In the example of the extrusion system 1 shown in Figs. 1a to 1c, the direction in which the final extrudate is created, differs from the extrusion direction 15 of extruder unit 10, as the extrudate is received by a profile which is, together with die carrier device 21, rotated about rotation axis 26 that is oriented vertically and that intersects the extrusion direction 15.

The rotation axis 26 is substantially perpendicular to the extrusion direction 15 of the extruder unit 10. In the present example, the angle between the rotational axis 26, and therefore the movement direction of die carrier device 21, and the extrusion direction 15 of the extruder unit 10 is substantially perpendicular, i.e. substantially 90°. Substantially perpendicular as used herein refers to an intersection angle of more than 75°, preferably more than 80° and most preferably more than 85°. However, in a different example, the angle might also be different, for instance less than 70°, as long as extrudate 2 extruded from the extruder unit 10 through nozzle device 11 can be received by a profile 50 of a die component 200 of die carrier device 21.

Fig. 1 further shows two cooling devices 22 being arranged in a 90° position to each other. The number of cooling devices 22 can be less than two, but also more than two. In case that there are provided more than two cooling devices 22, it is preferred that they are arranged in a regular distance to each other in the circumferential direction of die carrier device 21.

The cooling devices 22 are provided for cooling the extrudate together with the die carrier device 21 as well as the die component(s) 200 and/or only the die carrier device 21 as well as the die component(s) 200 if the produced extrudate has already been discharged from the die carrier device 21. For example, if the extrudate is discharged, viewed in the direction of rotation of the die carrier device 21 in Fig. 1a, between the first and the second cooling device 22 of Fig. 1 a, then the second cooling device 22 cools only the die carrier device 21 and the die component 200.

The cooling can be carried out actively and/or passively. In the latter case, the cooling devices 22 are formed by, for example, box-shaped or rectangular cooling bodies made from a material having good thermal conductivity properties, like aluminum or an alloy thereof. As can be seen in Fig. 1a, the cooling devices 22 are provided with a recess formed for receiving die carrier device 21 such that both opposite vertical sides of a recess can be close to die carrier device and/or can even be come in contact to die carrier device 21 and die component(s) 200. Moreover, the cooling device 21 can be provided with cooling rips and/or a motor driven fan. In case of an active cooling, a cooling fluid can be pumped through the cooling devices 22 in order to dissipate the heat.

It has to be noted that, besides or alternatively to cooling devices 22, one or several other processing devices can be provided at the moving path of the carrier device 21 between, before or after the cooling devices 22. For instance, a heating device (not shown) can be provided which can be an IR heater and which is used e.g. to cause a cross-linking within the extruder.

In the present example, the die carrier device 21 in the form of a wheel is driven respectively rotated by motor 24 provided underneath table 23 about rotation axis 26. It is contemplated that wheel 21 can also be rotated by any other driving means that can be provided at an arbitrary position with regard to wheel 21.

In the example shown in Figs. 1 a to 1c and 2, the final extrudate's cross-section is defined by the shape of profile 50 and the shape of a counter element 13 provided with nozzle device 11 on the surface side in contact with die carrier device 21. Accordingly, counter element 13, which is in this example constant over the axial length of the extrudate, defines at least one surface of the extrudate which will also not vary over the axial length of the final extrudate. For instance, nozzle device 11 respectively the counter element 13 thereof strips material off the extruded material received in die unit 20, such that the outer surface of the extrudate being created in the portions of the die carrier device 21 being moved past nozzle device 11 comprises a substantially constant outer surface corresponding to a counter element 13 of nozzle device 11 in contact with die carrier device 21.

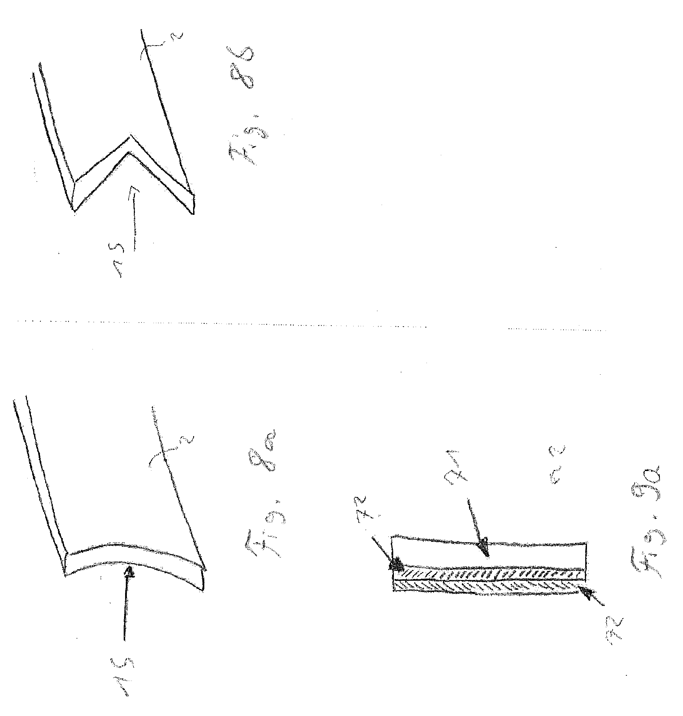

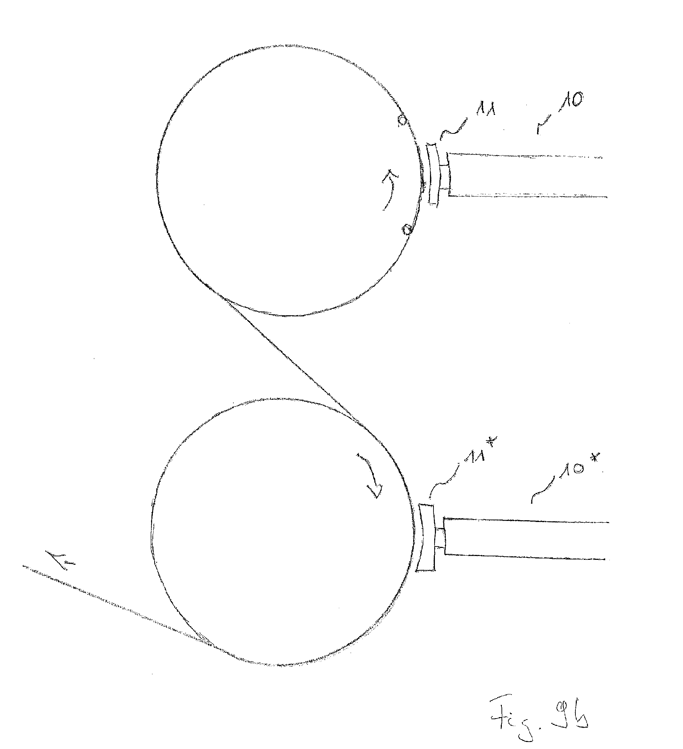

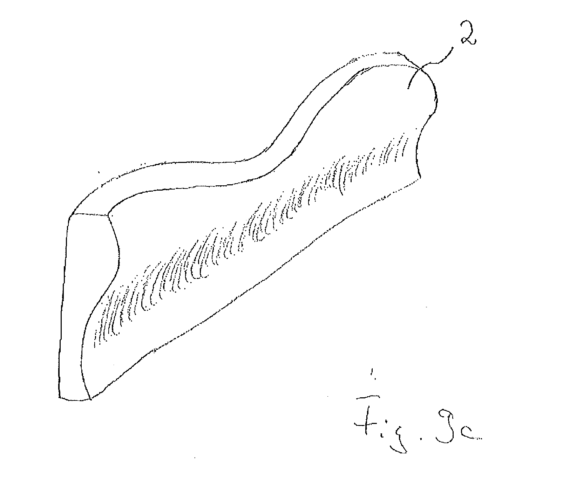

In the present example, counter element 13 is in contact with die component 200 with a substantially linear edge in vertical direction, such that the resulting outer surface of the final extrudate becomes substantially planar. However, it is of course contemplated to provide counter element 13 with a different outer shape as a contacting edge, as will be detailed with reference to Figs. 8 and 9 below. In the present example, counter element 13 is replaceable such that it can be adapted to the specific needs of the extrudate to be manufactured.

The material to be extruded is, in this example, a plastic material. However, in other examples, any material suitable for extrusion is contemplated. For instance, it can be PVC (polyvinylchloride), PE (polyethylene), PP (polypropylene), PVDF (polyvinylidene fluoride) or ECTFE (ethylenchlortrifliuorethylen). In some cases, like PVDF or ECTFE the material of the die unit 20, in particular the die component 200 has to be adapted to these materials in order to be resistant against the material for the extrudate. In principle, any material the viscosity of which allows an extrusion process, can be used. Thus, the material extruded by extruder 10 can be metal, such as aluminum, or even food, such as mass for making pasta. All components of extrusion system 1 are in the present example made of heat-resistant material, such that extrusion of plastics performed at increased temperature does not destroy or damage any of the components of the system. Materials suitable for the components of extrusion system 1 include temperature resisting plastics and metal. However, the person skilled in the art also contemplates employing different suitable materials.

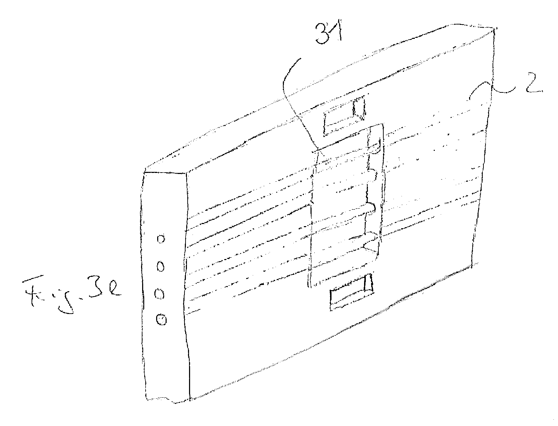

Finally, Figs. 1a to 1c also shows insertion unit 30 that insert in this example a wire 31 into die carrier device 21 prior to the position, in which die carrier device 21 is positioned in front of nozzle device 11 in the preferred rotation direction of die carrier device 21. With this arrangement, it is possible to provide a wire or a different insertion element to be inserted into the profile 50 of die carrier device 21 before pressing the extrudate onto die carrier device 21. The wire 31 can have different shapes, for example a wire with a straight shape or a wire having an undulating form. The wire 31 can be used a current line wherein the wire can be isolated or not as shown, for example, in Fig. 3e. In the latter case, the extrudate forms the isolation. If the wire 31 is not isolated and the extrudate is provided with a window as shown in Fig. 3e, then an electrical connection can be established there. Moreover, if the extrudate is provided with a pocket as also shown in Fig. 3e, then, for example, a LED can be arranged therein wherein the wire 31 can be used for providing electrical power supply for said LED. Moreover, also one or several fibers can be used. This advantageously results in the insert being present in the final extrudate without inserting it in an additional manufacturing step after the extrusion process has finished.

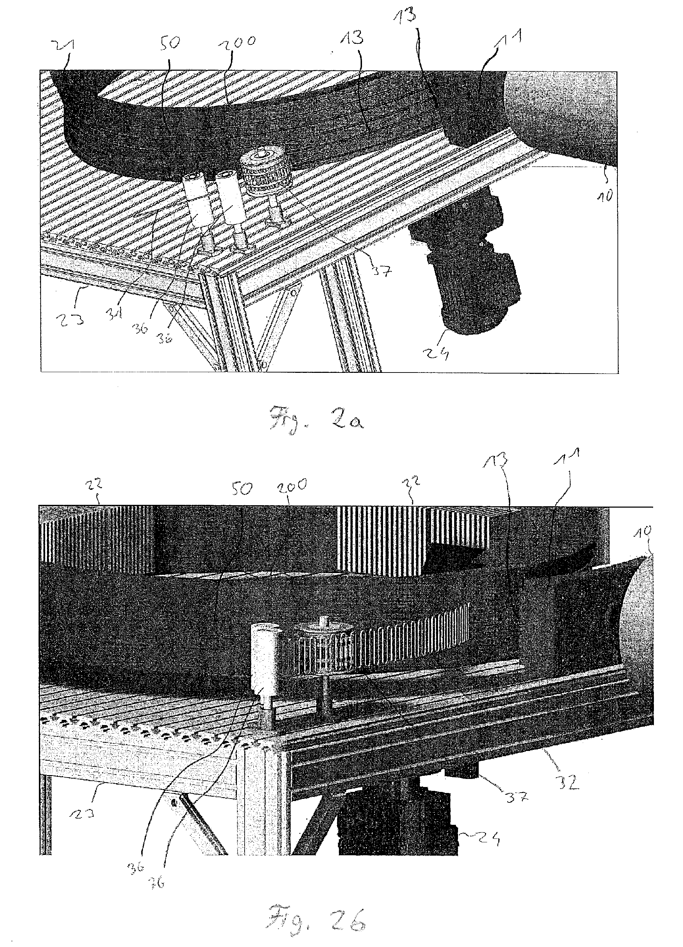

The insertion unit 30 will now be described in more detail with reference to Figs. 2a and 2b. Fig. 2a shows an example of an insertion unit 30 providing a single wire 31 made for example from a metal, to profile 50 being provided on the outer circumferential surface of die carrier device 21. On the right side of the die carrier device wheel 21, as shown in the top view of Fig. 1c, nozzle device 11 of extruder unit 10 faces die carrier device 21. The die carrier device 21 is, in this example, arranged to be rotated counterclockwise, i.e. in a left-handed direction by motor 24. Wire 31 is provided to the right of nozzle device 11, as seen from die carrier device 21, and thus provided prior to the die carrier device 21 facing nozzle device 11 in movement direction, respectively turning direction, of die carrier device 21. With this arrangement, it is possible that wire 31 be embedded in extrudate due to it being inserted into the die carrier device 21 prior to the application of the extrudate. It is thus possible to avoid the additional step of pressing the wire into final extrudate, as the extrudate is manufactured already with the wire 31 embedded therein.

The example of Fig. 2a shows two vertical primary guiding cylinders 36 used for guiding wire 31 from a wire supply (not shown) and an additional vertical cylinder 37 used for guiding wire 31 in different applications, particularly used for guiding meander wire 32 as shown in Fig. 2b. Moreover, guiding cylinders 36 can be the end of a pilot-heading device in order to e.g. straightening a wire being fed from a roll.

Fig. 2b shows substantially the same arrangement as Fig. 2a, apart from wire 31 being replaced by meander wire 32. Meander wire 32 is provided with a continuous series of sharp turns, imitating the meander turns of rivers. This arrangement allows a long wire to be provided in a comparable short length of final extrudate. Providing meander wire 32 in the extrudate allows, for instance, to provide flat plastic cables to be used for plastic welding. Meander wire 32 provided in or embedded within these flat plastic wires can be heated, for instance, induction heated, and thereby advantageously melt the plastic cables used for plastic welding of, for instance, tubing.

It has to be noted that, instead of wire 31 or meander wire 32, other components can be inserted in the extrudate. For instance, an element made from a material which cannot coextrudate with the extrudate material leaving nozzle device 11, can such be inserted in the extrudate.

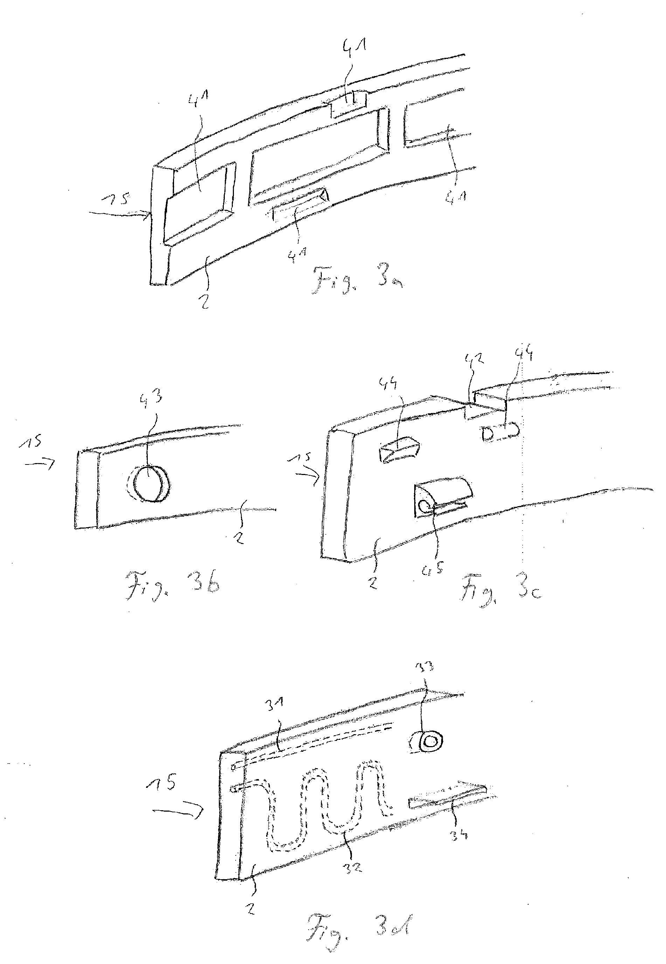

Figs. 3a to 3d show different examples of final extrudate 2 comprising a non-constant cross-section along the extrudate, which are possible to be created by extrusion system 1 in one example of the present invention.

Fig. 3a shows a final extrudate 2 viewed from the profile 50 side of die carrier device 21 in perspective view. The nozzle device 11 was arranged on the rear surface of extrudate 2 and the extrusion direction 15 is indicated with an arrow near the rear surface of extrudate 2 in this perspective. Extrudate 2 shows different indentations 41 with different shapes along the axial length of extrudate 2. For example, several indentations 41 in the center of extrudate 2 show constant rectangular shape. It is also possible to provide indentation 41 on the upper side of the final extrudate 2. Another example is the indentation 41 provided near the lower edge of extrudate 2. This example shows triangular side walls. All indentations 41 result from elevations provided in the profile 50 of the die carrier device 21. As obvious to a person skilled in the art, arbitrary forms of indentations or recessed portions are achievable with the non-constant profile 50 provided along the die carrier device 21.

Fig. 3b shows an extrudate 2 in the same perspective as shown in Fig. 3a, wherein a through hole 43 is provided in extrudate 2 in this example. At the position of through hole 43, no extruded material is supplied from the extruder unit 10 through nozzle device 11 to die carrier device 21. For instance, nozzle 11 can strip off the entire extruded material from the position corresponding to through hole 43 on profile 50 of die component 200 in this example. Of course, other shapes of through holes such as rectangular or arbitrary shaped through holes are also contemplated and the exemplary circular through hole is just one example thereof.

Fig. 3c shows a different example of extrudate 2 in the same perspective as shown in Figs. 3a and 3b comprising a non-constant cross-section in longitudinal direction of the extrudate. In particular, Fig. 3c shows extrudate 2 provided with a recess 42, elevations 44 and a clamping elevation 45. Elevations 44 are shown with different shape, for instance, a semicircular side surface of elevation 44 and a circular sidewall of elevation 44. Clamping elevation 45 is provided to be attached to a corresponding clamping elevation of a different element. In this example, clamping elevation 45 is provided for receiving a corresponding circular clamping element. However, also different forms and shapes of clamping elevations are of course known to the skilled person in the art.

Fig. 3d shows another example of extrudate 2 in perspective view, with non-constant cross-section in longitudinal or axial direction of the extrudate 2. Extrudate 2 shown in Fig. 3d comprises a wire 31, such as wire 31 provided by insertion unit 30, meander wire 32, as provided with meander wire guiding cylinder 37, for instance, embedded therein. Further, extrudate 2 comprises in this example a threaded sleeve 33 and a metal inlay 34 embedded therein, both inserted by an accordingly configured insertion unit 30. Threaded sleeve 33 can, for instance, be suited for threading a different element, such as a screw, into extrudate 2. Metal plate 34 can be of any particular metal, a metal alloy or structures of different metals. It can also be an electronic circuit board, as long as it is, depending on the material to be extruded, not vulnerable to heat, in case extrusion is performed at a certain elevated temperature. Furthermore, also other forms of elements and materials that can be inserted into the final extrudate 2 are contemplated by a person skilled in the art.

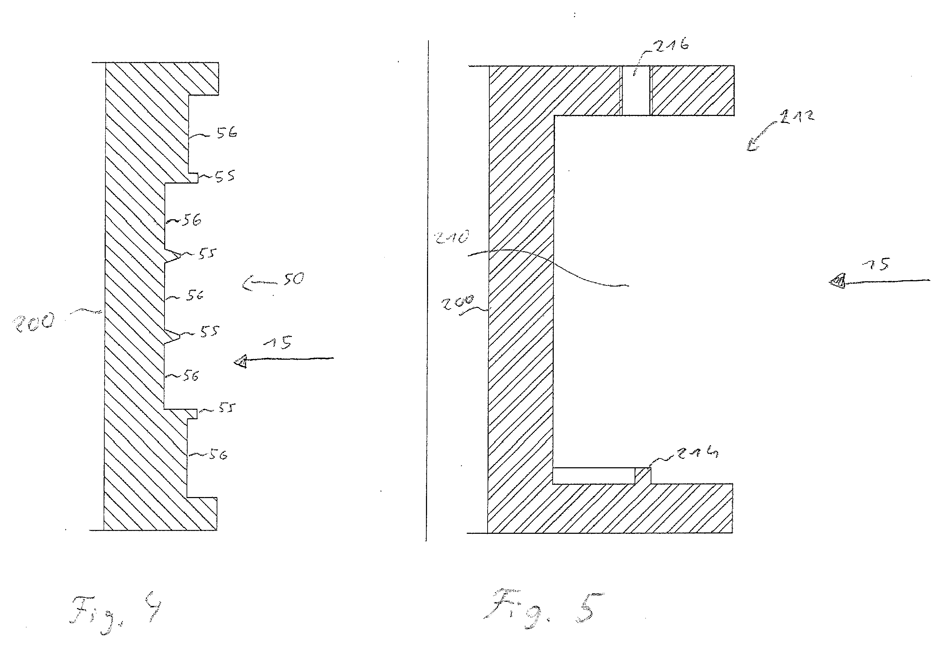

Fig. 4 shows an exemplary cross-section of a profile 50 of a die component 200. Profile 50 is shown on the right-hand side, the side arranged for being at least temporarily and partly positioned in front of nozzle device 11 of extruder unit 10 as indicated by arrow 15 indicating the extrusion direction. Profile 50 consists of flat portions 56 alternating with protruded portions 55. The flat portion 56 to the top and the flat portion 56 to the bottom are least recessed with regards to the front surface of profile 50, i.e. the edge to the right hand side of die component 200 as shown in Fig. 4. This edge, on the right of Fig. 4, is intended to be in contact with counter element 13 of nozzle device 11. In other words, every portion of profile 50 being recessed with respect to the right edge of die component 200 in Fig. 4 will appear in the final extrudate 2 with a thickness corresponding to the recessed depth.

Accordingly, the center flat portions 56 will correspond to a thicker final extrudate 2 then the outer flat portions 56. The different protrusion portions 55 will account for corresponding grooves between the flat portions in the final extrudate 2. This is, of course, only an exemplary cross-section of a profile 50 of a die component 200. However, other forms and shapes are of course obvious to a person skilled in the art. Furthermore, it is also understood by a person skilled in the art that this cross-section can vary with the axial position within the die component 200. In other words, the profile cross-section can vary between different die components 200 of the die unit 20 and can also vary among a single die component 200. It is further contemplated that die components 200 are replaceable, as detailed below.

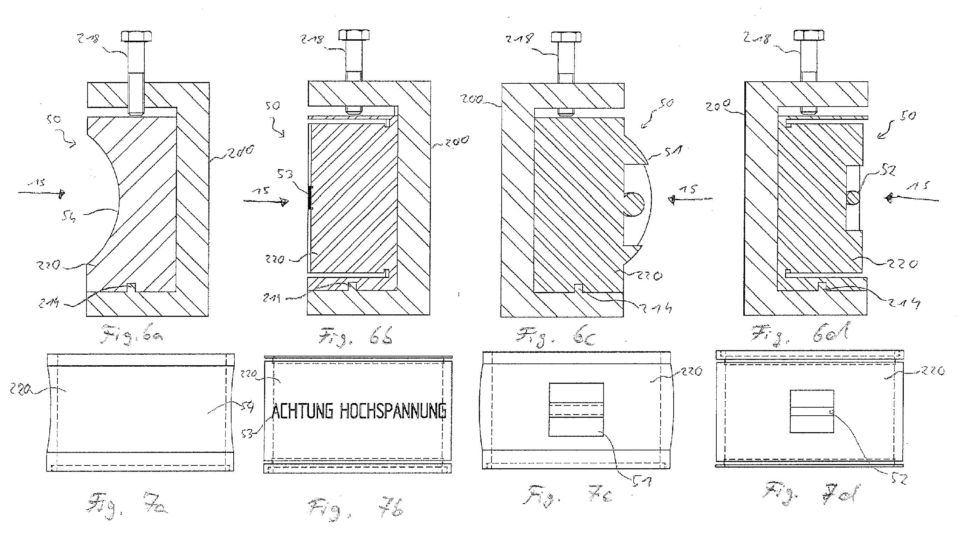

Fig. 5 shows an example of a die component 200 suitable for receiving and carrying a profile inlay, such as profile element 220 shown in Figs. 6 and 7. The die component 200 can in the same way as the earlier described die components be removably attached to the outer circumferential surface of, for instance, die carrier device 21 shown in Figs. 1 and 2. With regard to the die component 200 shown in Fig. 5, the left-hand side would correspond to the side attached to the die carrier device, wherein the receptacle 210 disposed on the right-hand side of die component 200 would correspond to the outer circumferential side of die carrier device 21. Die component 200 is, in this example, shown without a profile element 220. The receptacle 210 for receiving a profile element 220 therein comprises a nose 214 on its lower side, into which a profile element 220 can be engaged, such that the probability of unwanted loosening of the profile element 220 out of the die component 200 is reduced. Using attachment hole 216, additional attachment means 218, as discussed below with reference to Figs. 6a to 6d, can be provided such that a profile element 220 is secured both on the upper side and the lower side thereof.

Figs. 6a to 6d show different examples of cross sections of profile elements 220 removably attached within receptacle 210 of die component 200 as shown in Fig. 5. The different profile elements 220 show different profiles 50, which are later responsible for the final shape of the extrudate 2. In Figs. 6a and 6b, profile 50 is on the left hand side, in other words, the extruder unit 10 with nozzle device 11 would be provided to the left of the respective die component 200 in these examples. Figs. 6c and 6d show the die component 200 in a cross-section, in which the profile elements 220 are provided to the right-hand side of the figure, i.e. in the same configuration as shown, for example, in Fig. 5. In this example, extruder unit 10 and nozzle device 11 would provide the extrudate from the right-hand side as depicted with the arrow pointing in extrusion direction 15.

Figs. 7a to 7d show the profile of profile elements 220 of corresponding Figs. 6a to 6d, respectively, as seen from the outward directed surface of the respective profile elements 220.

More specifically, Fig. 6a shows a profile of profile element 220 being provided with a partly spherical indentation 54. Extrudate 2 will thus be thicker in the center and continuously narrowing towards the side borders.

Fig. 6b shows an example of a profile element 220 being provided with a notch 53 that accounts for a letter in the extrudate. By means of notch 53, arbitrary messages and phrases can thus be introduced in the final resulting extrudate 2. It is also possible that only a cavity is provided in which a letter or a sign or the like is introduced during a later manufacturing step.

Fig. 6c shows an example of clamping elevation 51 being provided on the surface corresponding to profile 50 of profile element 220. Clamping elevation 51 consists of different parts. On the outer edges partly spherical, in cross-section appearing partly cylindrical, portions which define the sidewalls of clamping elevation 51. Next to sidewalls of clamping elevation 51 towards the center of profile 50 there are provided flat portions. In the center of clamping elevation 51 a partly spherical elevation is provided, resulting in an engaging means, into which a corresponding partly cylindrical element can be introduced and maintained. As can be seen in Fig. 7c, which is a top view onto the profile of profile element 220 with the clamping elevation 51 as shown in Fig. 6c, clamping elevation 51 is not provided throughout the entire axial or longitudinal cross-section of a final extrudate 2, but merely over a short axial distance instead. By providing repeatedly clamping elevations 51 over the length of extrudate 2, multiple connection and attachment means are provided in the final extrudate 2.

Finally, Fig. 6d shows an example of clamping indentation 52 provided within profile elements 220. Profile element 220 comprising profile 50, as shown in Fig. 6d, appears similar to the profile 50 as shown in Fig. 6c. However, clamping indentation 52 differs from clamping elevation 51 in that the clamping element 52 does not protrude out of the profile, but is recessed with regard to the surface of profile 50. As can be seen from Fig. 6c, the clamping element 52 has an undercut the manufacturing of which can easily be done with the present invention. Accordingly, an extrudate 2 manufactured by using the profile element 220 as exemplarily presented in Fig. 6d has a clamping elevation that protrudes therefrom, wherein the extrudate manufactured by using profile element 220 as shown in Fig. 6c, an indentation will be present in final extrudate 2. With regards to Fig. 7d, it can also be seen that clamping indentation 52 is only provided at a part of the full axial length, instead of being provided over the entire length of profile element 220 in this example.

Fig. 8a shows a first example of extrudate 2 being created with a nozzle device 11 having a counter-element 13 with a non-planar surface. In the example of Fig. 8a, the nozzle side is provided to the left-hand side of the Fig. 8a indicated by an arrow pointing in extrusion direction 15. It can be readily seen that the surface of the extrudate on the nozzle side is convex towards the die component side. It is thus possible, providing an adequate counter element 13, to define both sides of the extrudate, the nozzle device 11 side and the die component side.

Another example of a final extrudate 2 manufactured with a non-planar nozzle counter element 13 is shown in Fig. 8b. The extruder side surface of Fig. 8b is not concave as shown in Fig. 8a but folded with regard to the center of the extrudate 2. Of course, the flexing point does not have to be in the center of the extrudate, but the skilled person contemplates to provide it at an arbitrary position of the profile 50. Further, also combinations of bent and folded parts of the profile 50 and counter-element 13 are appreciated.

Next, an example of providing an extrudate with multiple layers of extruded material is shown with reference to Fig. 9a. To the right-hand side of Fig. 9a is shown main layer 71 that is created by extruding material by extruder unit 10 onto die carrier device 21. A second extrusion layer 72 is extruded onto the nozzle 11 surface side of first extrusion layer 71 at a position of the die carrier device 21, in which die carrier device 21 has been rotated for a certain distance after being positioned in front of first extruder unit 10. At that position, a second extruder unit 10 that can, but must not, be providing a second extrusion material different from the first extrusion material, is provided. This second extruder unit extrudes a second sheet or layer of extrusion material 72 onto the main extrusion layer 71. Moreover, it is also possible to arrange two extrusion systems 1 consecutively as shown in Fig. 9b for producing an extrudate having different layers. Here, the extrudate is guided from the first extrusion system 1 to the second extrusion system 1' in a S-shape course so that the back side of the extrudate leaving the first extrusion system 1 becomes the front side in the second extrusion system 1'. In case that there is no cooling, the distance between the first and second extrusion system 1, 1' is chosen such that the extrudate can be provided with the further layers in the second extrusion system 1' without damaging the extrudate produced in the first extrusion system 1. Both extrusion systems 1,1' are preferably designed identically.

In case the extrudate has multiple layers of extruded material, for example the extrudate shown in Fig. 9a with three layers, an extrusion system can be used as shown in Fig. 9b wherein one of both extrusion system 1, 1', preferably the first extrusion system 1, is formed by an coextruder. Of course, such a coextruder can also be used in an extrusion system having only one extruder unit.

Fig. 9c shows an exemplary extrudate having a formed upper edge which can be made by a respective element (not shown) in die component(s) 200 or an additional element being arranged close to nozzle 11. Same is possible for the lower edge of the extrudate. Additionally or alternatively, the front face of extrudate can have a continuous or non-continuous contour protruding from the extrudate which can be formed by nozzle 11.

The material used for the second and any consecutive layer may be the same material as extruded for obtaining the first extrusion layer 71, but can also be different instead. For instance, the material may show any particular desired properties, for instance, concerning heat exchange, conductivity, color, scratching resistance or other properties. In theory, no limit exists as to the number of additional layers 72 to be provided onto layer 71. However, in practice, the number is usually not too big, as an increased number of layers increase the complexity of the system which has to be traded off against the advantageous effect of an additional extrusion layer.

It can also be contemplated to provide insertion unit 30 in between the first extruder unit 10 and a consecutive extruder unit 10. By this, it is possible to insert or embed material between the first 71 and the second 72 layer, or in the second layer 72 only, respectively.

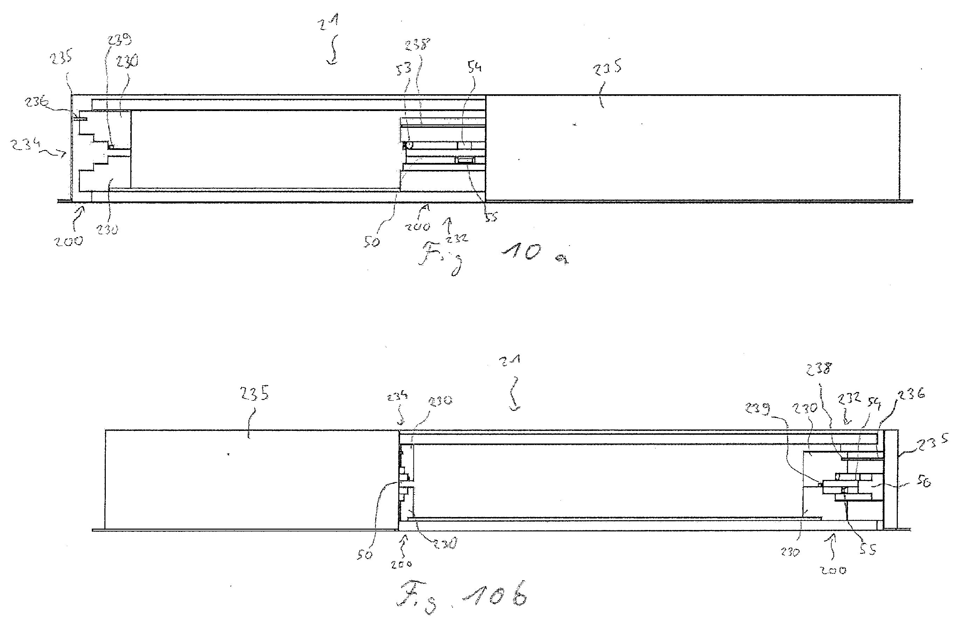

Figs. 10a and 10b depict an example of die component 200 being comprised of two respective die component halves 230 as seen in a schematic side view of die carrier device 21. In this example, 270° of the outer circumference of die carrier device 21 is covered by a ring component 235. In Fig. 10a, the 90° outer circumference not covered by ring element 235 are depicted on the left side of the figure. The uncovered part is shown to the right side of die carrier device 21 in Fig. 10b. Returning to Fig. 10a, in the left part that is not covered by ring element 235, two distinct die components 200 are shown. Die component 200 drawn in the center of Fig. 10a shows two die component halves 230 in a closed state 232. In other words, no open space is provided between the two die component halves 230 in this position. Die component 200 shown in the center of Fig. 10a further comprises a joint profile 50 combined from the profiles of both die component halves 230. The profile 50 comprises in this example a notch 53, and indentation 54 and a protrusion 55, as was already explained in further detail with reference, for instance, to Fig. 6 above. Moreover, die component 200 shown in closed state 232 further comprises a groove 238 that acts as a guiding element for guiding the relative movement of the two die component halves 230.

In this example, groove 238 is provided only with respect to the upper die component half 230. However, in different embodiments or examples, groove 238 can also be provided to the lower die component half 230 or to both die component half 230 in another example. Even further, different guiding elements are of course contemplated and well known to the person skilled in the art, which are suitable for guiding the relative movement of die component halves 230 from an open to and closed position and vice versa.

Die component 200 shown in an open state 234 is depicted on the left hand side of Fig. 10a in a side view. In other words, die component 200 on the left side of Fig. 10a is rotated about 90° with regard to die component 200 shown in the center part of Fig. 10a, which is shown substantially from the front. Die component 200 on the left-hand side of Fig. 10a is, as mentioned, shown in the open position 234. Further to the left of this die component 200 the cover component 235 is shown in cross-section together with a guiding component 236 realized by a guiding nose in this example. Guiding element 236 can have a straight or plain shape or can, for example, have an undulating shape. Cover element 235 does preferably not surround completely die component 200 in order to allow a heat dissipation, for example, by cooling devices 22. Guiding nose 236 engages with groove 238 for guiding the die component half 230 in this example.

Profile 50 of die component 200 shown on the left-hand side of Fig. 10a further presents an undercut profile 239. Undercut profile 239 allows the provision of an undercut in the final extrudate by extruding material onto die component 200 in the open position 234 followed by a subsequent transition from the open position 234 to the closed position 232.

In this example, guiding ring 235 is fixed, wherein die components 200 rotate with the die carrier device 21 about rotation axis 26. In other words, die components 200 rotate relative to ring component 235. Thus, groove 238 moves relative to nose 236 being the counter guiding element provided with the ring component 235. Thus, by altering the height of nose 236, a die component half 230 can be vertically moved with respect to the other die component half 230. In this form, by translating axially with respect to ring component 235, die component halves are moved from the open 234 to the closed position 232.

Advantageously, die components 200 can be opened and closed periodically during one turn of die carrier device 21. Thus, extrudate can be inserted into profile 50 in principle in the open position 232, followed by a closure of die component 200 by moving die component halves 230 together such as to transform die component 200 into the closed position 232. However, usually die component halves 230 are in the closed position. Thereby, undercuts and similar elements can be created in the extrudate. Afterwards, after continuous turning of die component 200 with respect to ring component 235, the extrudate is sufficiently cooled such that after reopening of die component 200 the final extrudate can be extracted from die component 200 in the open position 234. Finally, the empty die component 200 is subjected again to the extruder units 10 and can receive extrudate again. Thus, die component 200 can be readily reutilized without further steps being necessary.

In the example of Fig. 10a and 10b, die components 200 are provided at about 90° displacement between each other of rotating angle. In other words, four die components 200 are depicted distributed over the outer circumference of die carrier device 21. It is of course obvious to the skilled person that in other examples more or less die components 200 can be provided on the outer circumference of die carrier device 21. For instance, the entire surface can be provided with die components 200.

Also die components 200 with two die component halves 230 are preferably replaceably attached to die carrier device 21. Following therefrom, the profile of the final extrudate can readily be altered as needed.

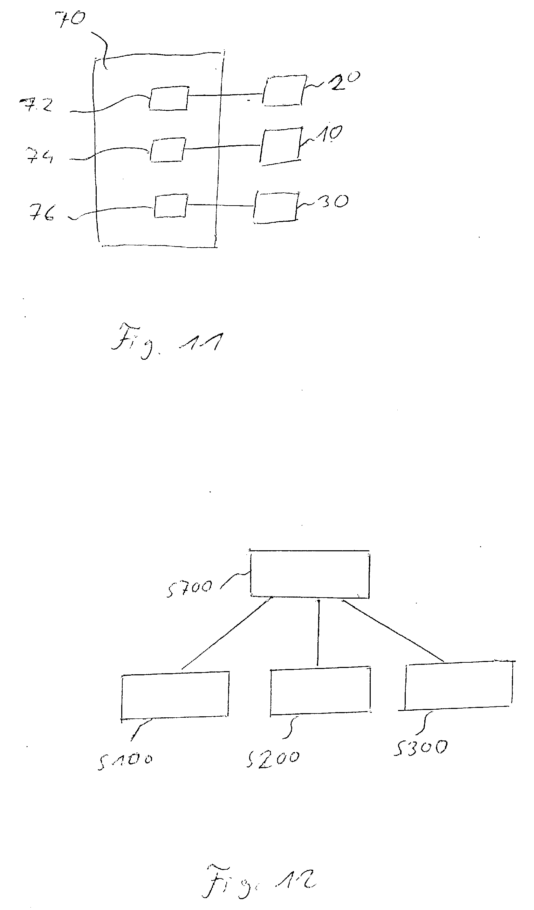

Turning now to the schematic diagram depicted in Fig. 11, the functionality of control unit 70 is described. In this example, control unit 70 comprises extruder control device 72, die control device 74 and insertion control device 76. Extruder control device 72 is in communication with extruder unit 10 and arranged for operating the extrusion unit 10. In particular, but not limited to, extruder control device 72 is arranged for controlling the extrusion rate of extrusion unit 10. Die control device 74 is in communication with die unit 20 and in particular arranged for controlling the rotation speed of die carrier device 21. Insertion control device 76 finally is in communication with insertion unit 30 and arranged for, particularly, but not limited to, controlling the insertion speed of insertion unit 30.

The operation of control unit 70 is preferably such that die control device 72, extruder control device 74 and insertion control device 76 control the die unit 20, extrusion unit 10 and insertion unit 30, respectively, such that a rotation of the die carrier device 21 is synchronized with an extrusion rate of the extrusion unit 10 and preferably also the insertion speed of the insertion unit 30. It is such possible that stress and strain within the final extrudate be minimized.

Communication between the respective control devices and the respective units can be performed by wired communication, wireless communication and any other suitable means well-known to the skilled person in the art.

As described merely with regard to the synchronization feature, the skilled person will notice that control unit 70 may of course have further control features, such as controlling the operation of the extrusion system 1 to be within predefined operating parameters. Even further, control unit 70 can be integrated in the different control unit, for instance provided within a control unit for controlling the extrusion unit 10.

Next, an exemplary control method for controlling the extrusion system is schematically described with reference to Fig. 12. Fig. 12 basically indicates three substantially parallel occurring steps S100, S200 and S300. Further, Fig. 12 shows a fourth step S700 basically supervising the further steps S100, S200 and S300. By S100, extruding material through a nozzle device 11 of an extruder unit 10, as shown for instance in Figs. 1 and 2, in an extrusion direction 15 is indicated. At S200, the extruded material is received in a profile 50 of the die carrier device 21, which is rotated about a rotation axis 26. Preferably at the same time, material is inserted at step S300 in the profile of the die carrier device 21 by insertion unit 30. Step S700 depicts the control synchronization operated by control unit 70 as shown in Fig. 11. Specifically, at S700 the insertion of material by the insertion unit of step S300 is synchronized with the extruding of the extruder unit 10 as indicated by step S100 and the rotating of the die carrier device 21 as indicated by step S200. By this synchronization, it can be achieved, as already described, that stress and strain be minimized in the final extrudate. Moreover, a continuous and reliable quality of final extrudate can be assured.

The extrudate produced by the inventive extrusion system can be used, e.g., for profiles of the furniture industry, profiles for room setups like curtain rails, baseboards or the like, profiles for coupler strips, for heating tapes, general profiles for optical wave guides, control lines, data communication lines or the like, profiles for energy chains like light chains, profiles for cable channels, profiles for fenders, profiles including reflectors being, for example, provided for road markings, profiles for induction loops, or profiles for contact rails, respectively.

## Claims

1. An extrusion system (1) comprising an extruder unit (10) with a nozzle device (11) for extruding an extrudate (2) in an extrusion direction (15), and a die unit (20) having a die carrier device (21) carrying at least one die component (200) with a profile (50) for receiving the extrudate (2) from the nozzle device (11), wherein the profile (50) of the die component (200) is configured to be positioned temporarily and at least partly in front of the nozzle device (11) of the extruder unit (10),
**characterized in that** the die carrier device (21) is configured to rotate about a rotation axis (26) intersecting the extrusion direction (15).

2. The extrusion system (1) according to claim 1, wherein the die carrier device (21) is configured to rotate about a substantially vertical axis as the rotation axis (26).

3. The extrusion system (1) according to claim 1 or 2, wherein the die carrier device (21) is provided in the form of a substantially circular wheel, and wherein the at least one die component (200) is provided on the outer circumferential surface of the die carrier device (21).

4. The extrusion system (1) according to any of claims 1 to 3, wherein the die carrier device (21) is arranged to be provided with multiple die components (200) being distributed over the outer circumferential surface of the die carrier device (21).

5. The extrusion system (1) according to any of the preceding claims, wherein the die carrier device (21) is adapted to be replaceably attached to the die unit (20) and/or wherein at least one of the at least one die components (200) is adapted to be replaceably attached to the die carrier device (21).

6. The extrusion system (1) according to any of claims 1 to 4, wherein the die carrier device (21) comprises the at least one die component (200) as an integral part thereof and/or wherein the at least one die component (200) comprises the profile (50) as an integral part thereof.

7. The extrusion system (1) according to any of the preceding claims, wherein the at least one die component (200) is arranged to move in a direction substantially perpendicular to the extrusion direction (15) of the extruder unit (10) when being positioned at least partly in front of the nozzle device (11) of the extruder unit (10) upon rotation of the die carrier device (21).

8. The extrusion system (1) according to any of the preceding claims, wherein the at least one die component (200) comprises a receptacle (210), wherein the receptacle (210) is arranged for replaceably receiving at least one profile element (220) with a profile (50) for receiving the extrudate (2) from the nozzle device (11) and for removably attaching the profile element (220) within the receptacle (210).

9. The extrusion system (1) according to any of the preceding claims, wherein the at least one die component (200) is divided, preferably horizontally divided, into two die component halves (230), wherein the die carrier device (21) is arranged to move the two die component halves (230) relative to each other upon rotating about the rotation axis (26).

10. The extrusion system (1) according to any of the preceding claims, further comprising an insertion unit (30) for inserting material, such as conducting wire (31), in the profile (50) of the at least one die component (200), wherein the die carrier device (21) is configured to rotate about the rotation axis (26) in a preferred rotation direction and wherein the profile (50) is configured to be positioned in front of the insertion unit (30) prior to the nozzle device (11) in the preferred rotation direction of the die carrier device (21).

11. The extrusion system (1) according to any of the preceding claims, further comprising a control unit (70) with a die control device (72) for controlling the operation of the die unit (20) and an extruder control device (74) for controlling the operation of the extrusion unit (10), wherein the control unit (70) is arranged to operate the die control device (72) and the extruder control device (74) such that a rotation of the die carrier device (21) is synchronized with an extrusion rate of the extrusion unit (10).

12. The extrusion system (1) according to any of the preceding claims, wherein the nozzle device (11) comprises a counter element (13) that is arranged to be at least partly in contact with the at least one die component (200), wherein the surface of the final extrudate (2) is defined by the profile (50) of the at least one die component (200) and the counter element (13).

13. The extrusion system (1) according to any of the preceding claims, further comprising at least one further extruder unit (10) with a further nozzle device (11) for extruding a further extrudate, wherein the profile (50) of the at least one die component (200) is arranged to be positioned at least partly in front of the further nozzle device temporarily after the first nozzle device, when the die carrier device (21) is rotated about the rotation axis (26).

14. An extrusion installation comprising a first and a second extrusion system (1) according to any of the preceding claims, wherein the die units (20) of the first and second extrusion system, respectively, are arranged to at least partly contact each other, such that the extrudate (2) received in the first at least one die component (200) and in the second at least one die component (200), respectively, is contacted to form a single joint extrudate.

15. A control method for controlling an extrusion system (1), particularly according to any of the preceding claims, comprising the steps of:
- extruding material through a nozzle device (11) in an extrusion direction (15) of an extruder unit (10),
- receiving the extruded material in a profile (50) of at least one die component (200) of a die carrier device (21) of a die unit (20) positioned temporarily and at least partly in front of the nozzle device (11) of the extruder unit (10),
**characterized by**
- rotating the die carrier device (21) about a rotation axis (26) intersecting the extrusion direction (15).
